(19) Europäisches Patentamt
European Patent Office
Office européen des brevets

(11) EP 4 400 522 A1

(12) EUROPEAN PATENT APPLICATION
published in accordance with Art. 153(4) EPC

(43) Date of publication:
17.07.2024 Bulletin 2024/29

(21) Application number: 22874965.1

(22) Date of filing: 28.09.2022

(51) International Patent Classification (IPC):
*C08F 210/16* (2006.01) *C08F 4/6592* (2006.01)
*C08F 4/649* (2006.01) *C08F 4/642* (2006.01)

(52) Cooperative Patent Classification (CPC):
C08F 4/642; C08F 4/649; C08F 4/6592;
C08F 210/16; C08L 23/08

(86) International application number:
PCT/CN2022/122018

(87) International publication number:
WO 2023/051580 (06.04.2023 Gazette 2023/14)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 30.09.2021 CN 202111156978

(71) Applicants:
- China Petroleum & Chemical Corporation
  Beijing 100728 (CN)
- Sinopec (Beijing) Research Institute of Chemical Industry Co., Ltd.
  Beijing 100013 (CN)

(72) Inventors:
- WU, Changjiang
  Beijing 100013 (CN)
- LI, Juan
  Beijing 100013 (CN)
- HOU, Liping
  Beijing 100013 (CN)
- WANG, Wei
  Beijing 100013 (CN)
- ZHANG, Taoyi
  Beijing 100013 (CN)
- LUO, Chunxia
  Beijing 100013 (CN)
- ZHANG, Longgui
  Beijing 100013 (CN)
- ZHENG, Junpeng
  Beijing 100013 (CN)
- ZHENG, Gang
  Beijing 100013 (CN)
- DU, Wenjie
  Beijing 100013 (CN)
- SHENG, Jianfang
  Beijing 100013 (CN)
- GAO, Feifei
  Beijing 100013 (CN)

(74) Representative: Hoffmann Eitle
Patent- und Rechtsanwälte PartmbB
Arabellastraße 30
81925 München (DE)

# (54) ETHYLENE-ALPHA-OLEFIN COPOLYMER, PREPARATION METHOD THEREFOR, APPLICATION AND COMPOSITION THEREOF

(57) The present invention relates to the field of ethylene copolymers. Disclosed are an ethylene-copolymerized olefin copolymer having a high comonomer dispersion index, a preparation method therefor, an application thereof, and a composition comprising an ethylene-α-olefin copolymer. The ethylene-α-olefin copolymer contains 70-95mol% a structural unit derived from ethylene and 5-30mol% a structural unit derived from α-olefin. The α-olefin is an olefin having 5-10 carbon atoms, and a dispersion index RMD of the α-olefin structural unit in the molecular chain is greater than 102%. The ethylene-α-olefin copolymer of the present invention has a high comonomer dispersion index.

EP 4 400 522 A1

## Description

### CROSS REFERENCE TO RELATED APPLICATIONS

The present application claims the benefit of the Chinese patent application No. "202111156978.3", filed on September 30, 2021, entitled "ETHYLENE-α-OLEFIN COPOLYMER, PREPARATION METHOD THEREFOR, APPLICATION AND COMPOSITION THEREOF", the content of which is entirely incorporated herein by reference.

### FIELD

The present disclosure relates to the technical field of ethylene copolymers, in particular to an ethylene-copolymerized olefin copolymer having a high RMD, a preparation method therefor, a use thereof, and compositions comprising the ethylene-α-olefin copolymer.

### BACKGROUND

Polyethylene is one of the most widely used materials in commercial applications. The ethylene polymers produced using the coordination polymerization techniques comprise high-density polyethylene, medium-density polyethylene, linear low-density polyethylene, polyolefin plastomers/elastomers, and the like. The well-known polymerization processes in the art include slurry polymerization process, gas phase polymerization process and solution polymerization process, the catalysts in use may be categorized into titanium-based Z-N catalysts, chromium-based catalysts and metallocene catalysts.

Ethylene copolymer developed using metallocene catalysts is one of the high-performance varieties of polyethylene, with a comonomer transition from 1-butene to high-grade α-olefin (1-hexene, 1-octene and 4-methyl-l-pentene). When the number of comonomers increases, the polyethylene density decreases gradually, the polyethylene transitions sequentially from high-density linear polyethylene, medium-density linear polyethylene, low-density linear polyethylene to polyolefin plastomers/elastomers. Unlike the low-density polyethylene obtained from the free radical polymerization, the low-density ethylene copolymer elastomers only contain short branched chain structures composed of comonomer, and the type, content and distribution of the short branched chains directly affect the mechanical properties of copolymer. When the comonomer is uniformly distributed throughout the main polymer chain, the efficiency of the comonomer is fully exploited, thereby decreasing the melting point and density of the copolymer in the maximum extent by using the minimum amount of co-monomers. Therefore, as regards how to achieve copolymerization with a high content of comonomer while enabling the comonomer to be dispersed throughout the molecular chain more efficiently and uniformly, it is an issue with extreme concern for the researchers in the fields of catalyst and polymerization process, and also an important challenge for preparing the high-performance ethylene and α -olefin copolymer.

### SUMMARY

The present disclosure aims to overcome the problem in the prior art that the dispersity of comonomer in the existing ethylene-α-olefin copolymer is not sufficiently high, and provides an ethylene-α-olefin copolymer having a high RMD, a preparation method therefor, a use thereof, and a composition comprising the ethylene-α-olefin copolymer.

In order to fulfill the purposes, the first aspect of the present disclosure provides an ethylene-α-olefin copolymer comprising 70-95mol% of the structural unit derived from ethylene and 5-30mol% of the structural unit derived from α-olefin, the α-olefin is an olefin having 5-10 carbon atoms, and a RMD of the α-olefin structural unit in the molecular chain is greater than 102%.

Preferably, the ethylene-α-olefin copolymer comprises 80-95mol% of the structural unit derived from ethylene and 5-20mol% of the structural unit derived from α-olefin, the α-olefin is an olefin having 5-10 carbon atoms, and a RMD of the α-olefin structural unit in the molecular chain is greater than 103%.

Preferably, the ethylene-α-olefin copolymer comprises 82-89mol% of the structural unit derived from ethylene and 11-18mol% of the structural unit derived from α-olefin; more preferably, the ethylene-α-olefin copolymer comprises 84-89mol% of the structured unit derived from ethylene and 11mol% or more and less than 17mol% of the structured unit derived from α-olefin; further preferably, the ethylene-α-olefin copolymer comprises 84-89mol% of the structural unit derived from ethylene and 11-16mol% of the structural unit derived from α-olefin.

Preferably, the RMD of the α-olefin structural unit in the molecular chain is 104% or more, more preferably within a range of 104-108%.

Preferably, the molecular weight distribution Mw/Mn of the ethylene-α-olefin copolymer is within a range of 1.5-3, more preferably within a range of 1.5-2.5, further preferably within a range of 1.5-2.3.

Preferably, the ethylene-α-olefin copolymer has a melt index MFRC within a range of 1.0-50g/10min, more

preferably within a range of 1-15g/10min at 190°C under a load of 2.16kg.

Preferably, the ethylene-α-olefin copolymer has a half-melting enthalpy temperature $T_{1/2}$ within a range of 5-80°C, more preferably 10-70°C, further preferably 15-60°C.

Preferably, the α-olefin is an olefin having 5-8 carbon atoms.

Preferably, the α-olefin is one or more selected from the group consisting of 1-pentene, 1-hexene, 1-octene and 4-methyl-1-pentene, more preferably 1-octene.

According to a second aspect, the present disclosure provides a method for preparing an ethylene-α-olefin copolymer comprising the following step: under the olefin solution copolymerization conditions and the presence of a catalyst, a cocatalyst and a phenol, subjecting ethylene and α-olefin to copolymerized to obtain an ethylene-α-olefin copolymer,

wherein the catalyst contains diphenyl methylene (cyclopentadienyl) (fluorenyl) zirconium dichloride and/or diphenyl methylene (cyclopentadienyl) (2,7-di-tert-butyl-fluorenyl) zirconium dichloride, the cocatalyst is an organoaluminium compound, the phenol is 2,4-dihalo-1-naphthol,

the ethylene and the α-olefin are used in amounts such that the molar ratio of the structured unit derived from ethylene to the structured unit derived from α-olefin in the ethylene-α-olefin copolymer is (80-95): (5-20), and the α-olefin is an olefin having 5-10 carbon atoms.

Preferably, the ethylene and the α-olefin are used in amounts such that the molar ratio of the structured unit derived from ethylene to the structured unit derived from α-olefin in the ethylene-α-olefin copolymer is (82-89): (11-18), more preferably (84-89): (11-16).

Preferably, the catalyst calculated in terms of active metal is used in an amount of (0.01-10)$\times 10^{-6}$mol relative to 1mol of the ethylene.

Preferably, the organoaluminium compound is an aluminoxane and/or a hydrocarbyl aluminium represented by Formula 1,

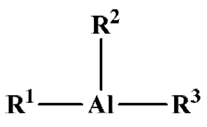 (Formula 1)

In formula 1, $R_1$, $R_2$ and $R_3$ are the same or different and each independently selected from the group consisting of alkyl (including cycloalkyl), alkoxy, aryl, alkaryl, aralkyl and hydrogen, and $R_1$, $R_2$ and $R_3$ are not hydrogen atoms at the same time.

Preferably, the organoaluminium compound is methylaluminoxane.

Preferably, the molar ratio of the organoaluminium compound calculated in terms of aluminium to the catalyst calculated in terms of active metal is 50-5,000: 1.

Preferably, the molar ratio of 2,4-dihalo-1-naphthol to the catalyst calculated in terms of active metal is 1-500: 1.

Preferably, the 2,4-dihalo-1-naphthol is 2,4-dichloro-1-naphthol and/or 2,4-dibromo-1-naphthol, more preferably 2,4-dichloro-1-naphthol.

Preferably, the α -olefin is an olefin having 5-8 carbon atoms.

More preferably, the α -olefin is one or more selected from the group consisting of 1-pentene, 1-hexene, 1-octene and 4-methyl-1-pentene, further preferably 1-octene.

The olefin solution copolymerization conditions comprise: the copolymerization temperature is within a range of -40°C to 200°C, preferably 25-120°C, more preferably 50-70°C; the partial pressure of ethylene during polymerization is within a range of 0.05-5MPa, preferably 0.1-2MPa, and more preferably 0.8-1.2MPa.

Preferably, the solvent used for the olefin solution copolymerization is one or more selected from the group consisting of benzene, toluene, ethylbenzene, xylene, pentane, hexane, heptane, octane and cyclohexane.

According to a third aspect, the present disclosure provides an ethylene-α-olefin copolymer composition, wherein the composition comprises the ethylene-α-olefin copolymer according to the present disclosure, or the ethylene-α-olefin copolymer prepared with the method of the present disclosure, and a solvent.

Preferably, the solvent is a residual preparation solvent derived from the preparation of the ethylene-α-olefin copolymer.

According to a fourth aspect, the present disclosure provides a use of the ethylene-α-olefin copolymer of the present disclosure in preparing an encapsulation film.

According to a fifth aspect, the present disclosure provides a use of the ethylene-α-olefin copolymer of the

present disclosure or the ethylene-α-olefin copolymer composition of the present disclosure as a toughening modifier.

Due to the aforementioned technical scheme, the present disclosure can provide an ethylene-α-olefin copolymer having a high RMD, a preparation method therefor, an application thereof, and a composition comprising the ethylene-α-olefin copolymer.

Since the ethylene-α-olefin copolymer of the present disclosure has a high RMD, the ethylene-α-olefin copolymer of the present disclosure has a lower half-melting enthalpy temperature than the existing ethylene-α-olefin copolymer under the condition of the same molar percentage content of the α-olefin comonomer.

Since the ethylene-α-olefin copolymer of the present disclosure has a high RMD, the ethylene-α-olefin copolymer of the present disclosure has a smaller amount of α-olefin comonomer than the existing ethylene-α-olefin copolymer when reaching the same crystallinity and melting point temperature, thereby reducing the costs.

## DETAILED DESCRIPTION

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with each other to produce one or more new numerical ranges, which should be deemed have been specifically disclosed herein.

The first aspect of the present disclosure provides an ethylene-α-olefin copolymer comprising 70-95mol% of the structural unit derived from ethylene and 5-30mol% of the structural unit derived from α-olefin, the α-olefin is an olefin having 5-10 carbon atoms, and a RMD of the α-olefin structural unit in the molecular chain is greater than 102%.

In the ethylene-α-olefin copolymer provided by the present disclosure, the structural units of the comonomer are dispersed in the molecular chain in a "super random" state, that is, the structural units of ethylene are uniformly and effectively dispersed by the structural units of the copolymerized α-olefin, so that the specific melting point and density of the polymer can be achieved by using a smaller amount of the comonomer. It means that the raw material cost of the polymer can be effectively reduced.

The term "super random" dispersion state in the present disclosure refers to that, in the ethylene-α-olefin copolymer of the present present disclosure, the structural units of comonomer are arranged in a separated manner, rather than forming a matrix or block structure, i.e., the comonomer structural units are arranged in a discontinuous, randomly dispersed manner on the polymer molecular chain. In the ethylene-α-olefin copolymer of the present disclosure, the dispersion degree of the comonomers on the polymer molecular chain is found to be higher than the ideal random distribution.

According to the present disclosure, preferably, the ethylene-α-olefin copolymer comprises 80-95mol% of the structural unit derived from ethylene and 5-20mol% of the structural unit derived from α-olefin; more preferably, the ethylene-α-olefin copolymer comprises 82-89mol% of the structural unit derived from ethylene and 11-18mol% of the structural unit derived from α-olefin; further preferably, the ethylene-α-olefin copolymer comprises 80-88mol% of the structural unit derived from ethylene and 12-20mol% of the structural unit derived from α-olefin.

Specifically, the specific content of the structural unit derived from ethylene in the ethylene-α-olefin copolymer may be, for example, 80mol%, 81mol%, 82mol%, 83mol%, 84mol%, 85mol%, 86mol%, 87mol%, 88mol%, 89mol%, 90mol%, 91mol%, 92mol%, 93mol%, 94mol%, 95mol%, and the like, or within the ranges formed by any two numerical values thereof.

Specifically, the specific content of the structural unit derived from α -olefin in the ethylene-α-olefin copolymer may be, for example, 5mol%, 6mol%, 7mol%, 8mol%, 9mol%, 10mol%, 11mol%, 12mol%, 13mol%, 14mol%, 15mol%, 16mol%, 17mol%, 18mol%, 19mol%, 20mol%, and the like, or within the ranges formed by any two numerical values thereof.

According to the present disclosure, preferably, the RMD of the α-olefin structural unit in the molecular chain is 103% or more; more preferably, the RMD of the α-olefin structural unit in the molecular chain is 104% or more; more preferably, the RMD of the α-olefin structural unit in the molecular chain is within a range of 104-108%; further preferably, the RMD of the α-olefin structural unit in the molecular chain is within a range of 104-107%.

Specifically, the RMD of the α-olefin structural unit in the molecular chain may be, for example, 103.1%, 103.6%, 103.7%, 103.8%, 103.9%, 104%, 104.1%, 104.2%, 104.3%, 104.4%, 104.5%, 104.6%, 104.7%, 104.8%, 104.9%, 105%, 105.1%, 105.2%, 105.3%, 105.4%, 105.5%, 105.6%, 105.7%, 105.8%, 105.9%, 106%, 106.1%, 106.2%, 106.3%, 106.4%, 106.5%, 106.6%, 106.7%, 106.8%, 106.9%, 107%, 107.1%, 107.2%, 107.3%, 107.4%, 107.5%, 107.6%, 107.7%, 107.8%, 107.9%, 108%, and the like, or within the ranges formed by any two numerical values thereof.

In the present disclosure, the RMD of the α-olefin structural unit in the molecular chain is defined by the following formula and measured according to the following steps:

$$RMD = \frac{AMD}{BMD}$$

Where AMD represents the absolute comonomer dispersity, and BMD represents the completely random comonomer dispersity or Bernoulli distribution.

The absolute comonomer dispersity AMD is measured according to the following steps. The absolute monomer dispersity is defined as the ratio of the number of comonomer clusters in the average molecule (N) divided by the number of monomer units on the average chain (X). If $n_1$ represents the number of isolated comonomer units, $n_2$ represents adjacent clusters of comonomer units, up to ... $n_x$ clusters of x adjacent comonomer units in the copolymer, X and N are defined as follows:

$$X = 1 \cdot n_1 + 2 \cdot n_2 + \cdots + x \cdot n_x = \sum_{i=1}^{i=x} i n_i$$

$$N = n_1 + n_2 + \cdots + n_x = \sum_{i=1}^{i=x} n_i$$

Thus, the absolute comonomer dispersity AMD is defined as:

$$AMD = \frac{N}{X} \cdot 100$$

Therefore, if only isolated comonomer units are present in the polymer molecule, AMD will be 100. In contrast, if all the comonomer units are grouped together, AMD is 0.

The ideal random comonomer dispersity or Bernoullian distribution BMD is determined by the following equation:

$$BMD = \frac{N_{Bernoullian}}{X_{Bernoullian}} \cdot 100 = 100 - MC$$

Where MC denotes the concentration (molar percentage) of the comonomers in the polymer. Therefore, if the polymer is composed of 95% of ethylene and 5% of 1-octene, the BMD is 95.

The method of calculating the absolute comonomer dispersity AMD by means of nuclear magnetic resonance (NMR) is described as follows:

The polymer is subjected to the nuclear magnetic resonance spectrum analysis, its peaks of nuclear magnetic resonance can be determined and characterized by the position (ppm) relative to tetramethylsilane. The actual "calibration" is performed relative to hexamethylsiloxane in view of the high operating temperature. With E representing ethylene units and X representing copolymerization units, the current calculation methods mostly tend to determine the absolute dispersity of the comonomer using a triplet distribution. The carbon atoms with which the branch chains are connected can only be one of three types, namely EXE, EXX and XXX.

Since each cluster consisting of two or more X units will contribute two EXX units, the following relationship exists:

$$EXE = n_1$$

$$EXX = 2(n_{2+} n_{3+} \ldots n_{i+\ldots})$$

That is,

$$EXE + \frac{1}{2}EXX = n_1 + n_2 + n_3 + \cdots + n_i + \cdots = N$$

Likewise, since the triplet XXX is found once in XXX, twice in XXXX, thrice in XXXXX, and so on:

$$XXX = n_3 + 2n_4 + 3n_5 + \cdots (n-2)n_i + \cdots$$

In conjunction with the three formulas mentioned above, we find:

$$EXE + EXX + XXX = n_{1+}2n_2 + 3n_3 + \cdots + in_i + \cdots = X$$

Thus, the absolute monomer dispersity determined by the nuclear magnetic resonance is:

$$AMD = \frac{N}{X} \cdot 100 = \frac{EXE+\frac{1}{2}EXX}{EXE+EXX+XXX} \cdot 100$$

EXE, EXX and XXX are measured based on the NMR peak heights or peak areas. In the examples of the present disclosure, X is O and represents the 1-octene copolymerization unit.

The RMD can be determined according to the above formula. In the content described hereinafter, the relative and absolute monomer dispersity of measured comonomer is calculated based the above formulae.

According to the present disclosure, the molecular weight distribution Mw/Mn of the ethylene-α-olefin copolymer is within a range of 1.5-3, preferably within a range of 1.5-2.5, more preferably within a range of 1.5-2.3.

Specifically, the examples of the molecular weight distribution Mw/Mn of the ethylene-α-olefin copolymer may be 1.5, 1.6, 1.7, 1.8, 1.9, 2.0, 2.1, 2.2, 2.3, 2.4, 2.5, 2.6, 2.7, 2.8, 2.9, 3.0, etc.

According to the present disclosure, the ethylene-α-olefin copolymer has a melt index MFRC within a range of 1.0-50g/10min, preferably within a range of 1-15g/10min at 190°C under a load of 2.16kg.

Specifically, the examples of a melt index MFRC of the ethylene-α-olefin copolymer at 190°C under a load of 2.16kg may be 1.0g/10min, 2.0g/10min, 3.0g/10min, 4.0g/10min, 5.0g/10min, 6.0g/10min, 7.0g/10min, 8.0g/10min, 9.0g/10min, 10.0g/10min, 11.0g/10min, 12.0g/10min, 13.0g/10min, 14.0g/10min, 15.0g/10min, 16.0g/10min, 17.0g/10min, 18.0g/10min, 19.0g/10min, 20.0g/10min, 21.0g/10min, 22.0g/10min, 23.0g/10min, 24.0g/10min, 25.0g/10min, 26.0g/10min, 27.0g/10min, 28.0g/10min, 29.0g/10min, 30.0g/10min, 31.0g/10min, 32.0g/10min, 33.0g/10min, 34.0g/10min, 35.0g/10min, 36.0g/10min, 37.0g/10min, 38.0g/10min, 39.0g/10min, 40.0g/10min, 41.0g/10min, 42.0g/10min, 43.0g/10min, 44.0g/10min, 45.0g/10min, 46.0g/10min, 47.0g/10min, 48.0g/10min, 49.0g/10min, 50.0g/10min, and the like.

According to the present disclosure, the ethylene-α-olefin copolymer has a half-melting enthalpy temperature $T_{1/2}$ within a range of 5-80°C, more preferably 10-70°C, further preferably 15-60°C. The term $T_{1/2}$ defined herein refers to a melting temperature corresponding to a melting enthalpy that is one half of the total melting enthalpy. A higher $T_{1/2}$ means a higher melting point, whereas a lower $T_{1/2}$ means a lower melting point.

Specifically, the half-melting enthalpy temperature $T_{1/2}$ of the ethylene-α-olefin copolymer may be, for example, 5°C, 6°C, 7°C, 8°C, 9°C, 10°C, 11°C, 12°C, 13°C, 14°C, 15°C, 16°C, 17°C, 18°C, 19°C, 20°C, 21°C, 22°C, 23°C, 24°C, 25°C, 26°C, 27°C, 28°C, 29°C, 30°C, 31°C, 32°C, 33°C, 34°C, 35°C, 36°C, 37°C, 38°C, 39°C, 40°C, 41°C, 42°C, 43°C, 44°C, 45°C, 46°C, 47°C, 48°C, 49°C, 50°C, 51°C, 52°C, 53°C, 54°C, 55°C, 56°C, 57°C, 58°C, 59°C, 60°C, 61°C, 62°C, 63°C, 64°C, 65°C, 66°C, 67°C, 68°C, 69°C, 70°C, 71°C, 72°C, 73°C, 74°C, 75°C, 76°C, 77°C, 78°C, 79°C, 80°C and the like.

In the present disclosure, the α-olefin is an olefin having 5-10 carbon atoms; preferably, the α-olefin is an olefin having 5-8 carbon atoms; more preferably, the α-olefin is an olefin having 6-8 carbon atoms.

For example, the α-olefin is one or more selected from the group consisting of 1-pentene, 1-hexene, 1-octene and 4-methyl-1-pentene; preferably, the α-olefin is 1-octene.

In a preferred embodiment of the present disclosure, the ethylene-α-olefin copolymer is an ethylene/1-octene copolymer, and because the ethylene/1-octene copolymer of the present disclosure has a high RMD, compared with

the existing ethylene/1-octene copolymer, the ethylene/1-octene copolymer of the present disclosure has a lower half-melting enthalpy temperature when the molar percentage content of the 1-octene comonomer is the same, for example, half-melting enthalpy temperature may be reduced by 2°C-8°C, preferably reduced by 3°C-6°C, more preferably reduced by 4°C-5°C.

In another preferred embodiment of the present disclosure, the ethylene-α-olefin copolymer is an ethylene/1-octene copolymer, and because the ethylene/1-octene copolymer of the present disclosure has a high RMD, compared with the existing ethylene/1-octene copolymer, the ethylene/1-octene copolymer of the present disclosure has a smaller amount of 1-octene comonomer, which can be reduced by 0.3-1.2mol%, preferably 0.5-1.0mol%, more preferably 0.6-0.8mol%, when reaching the same crystallinity and melting point temperature.

According to a second aspect, the present disclosure provides a method for preparing the ethylene-α-olefin copolymer comprising the following steps: under the olefin solution copolymerization conditions and the presence of a catalyst, a cocatalyst and a phenol, subjecting ethylene and α-olefin to copolymerized to obtain an ethylene-α-olefin copolymer,

wherein the catalyst contains diphenyl methylene (cyclopentadienyl) (fluorenyl) zirconium dichloride and/or diphenyl methylene (cyclopentadienyl) (2,7-di-tert-butyl-fluorenyl) zirconium dichloride, the cocatalyst is an organoaluminium compound, the phenol is 2,4-dihalo-1-naphthol,

the ethylene and the α-olefin are used in amounts such that the molar ratio of the structured unit derived from ethylene to the structured unit derived from α-olefin in the ethylene-α-olefin copolymer is (80-95): (5-20), and the α-olefin is an olefin having 5-10 carbon atoms.

According to the preparation method of the present disclosure, preferably, the ethylene and the α-olefin are used in amounts such that the molar ratio of the structured unit derived from ethylene to the structured unit derived from α-olefin in the ethylene-α-olefin copolymer is (82-89): (11-18); more preferably, the ethylene and the α-olefin are used in amounts such that the molar ratio of the structured unit derived from ethylene to the structured unit derived from α-olefin in the ethylene-α-olefin copolymer is (84-89): (11-16).

According to the preparation method of the present disclosure, the used amount of the catalyst can be selected according to the dosage of ethylene, preferably, the catalyst calculated in terms of active metal is used in an amount of $(0.01\text{-}10)\times10^{-6}$mol relative to 1mol of the ethylene; more preferably, the catalyst calculated in terms of active metal is used in an amount of $(0.1\text{-}5)\times10^{-6}$mol relative to 1mol of the ethylene.

According to the preparation method of the present disclosure, the organoaluminium compound may be aluminoxane and/or hydrocarbyl aluminium.

In an embodiment, the organoaluminium compound aluminoxane is preferably methylaluminoxane (MAO).

In another embodiment, the organoaluminium compound is a hydrocarbyl aluminium represented by Formula 1,

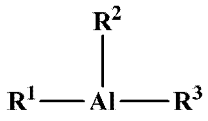 (Formula 1)

In formula 1, $R_1$, $R_2$ and $R_3$ are the same or different and each independently selected from the group consisting of alkyl (including cycloalkyl), alkoxy, aryl, alkaryl, aralkyl and hydrogen, and $R_1$, $R_2$ and $R_3$ are not hydrogen atoms at the same time;

The specific examples of the hydrocarbyl aluminium compound may include, but are not limited to: diethylaluminium hydride, di-n-propyl aluminium hydride, di-n-butyl aluminium hydride, di-isobutyl aluminium hydride, diphenyl aluminium hydride, di-p-tolyl aluminium hydride, dibenzyl aluminium hydride, phenylethyl aluminium hydride, phenyl-n-propyl aluminium hydride, p-tolylethyl aluminium hydride, p-tolyl-n-propyl aluminium hydride, p-tolyl-isopropyl aluminium hydride, benzylethyl aluminium hydride, benzyl-n-propyl aluminium hydride, benzyl-isopropyl aluminium hydride, ethyl aluminium dihydride, butyl aluminium dihydride, isobutyl aluminium dihydride, octyl aluminium dihydride, pentyl aluminium dihydride, diethyl aluminium ethoxide, dipropyl aluminium ethoxide, trimethyl aluminium, triethyl aluminium, tri-n-propyl aluminium, tri-isopropyl aluminium, tri-n-butylaluminium, tri-isobutyl aluminium, tripentyl aluminium, trihexyl aluminium, tricyclohexyl aluminium, tri-octyl aluminium, triphenyl aluminium, tri-p-tolyl aluminium, tribenzyl aluminium, ethyldiphenyl aluminium, triisopropyl aluminium, ethyl di-p-tolyl aluminium, ethyl dibenzyl aluminium, diethyl phenyl aluminium, diethyl p-tolyl aluminium and diethyl benzyl aluminium.

In a preferred embodiment, $R_1$, $R_2$ and $R_3$ in Formula 1 are methyl, ethyl, n-propyl, isopropyl, n-butyl, or isobutyl. More preferably, each of $R_1$, $R_2$ and $R_3$ in formula 1 is isobutyl.

According to the preparation method of the present disclosure, the organoaluminium compound is methylaluminoxane.

According to the preparation method of the present disclosure, the molar ratio of the organoaluminium compound calculated in terms of aluminium to the catalyst calculated in terms of active metal is preferably 50-5,000: 1, more preferably 200-3,000: 1, more preferably 500-2,000: 1.

According to the preparation method of the present disclosure, the molar ratio of 2,4-dihalo-1-naphthol to the catalyst calculated in terms of active metal is 1-500: 1, more preferably 5-300: 1, further preferably 10-200: 1, further more preferably 50-150: 1.

Examples of the 2,4-dihalo-1-naphthol may be 2,4-dichloro-1-naphthol and/or 2,4-dibromo-1-naphthol, preferably 2, 4-dichloro-1 -naphthol.

According to the preparation method of the present disclosure, the α-olefin is an α-olefin having 5-10 carbon atoms; preferably, the α-olefin is an olefin having 5-8 carbon atoms; more preferably, the α-olefin is an olefin having 6-8 carbon atoms.

Examples of the α-olefin may be one or more selected from the group consisting of 1-pentene, 1-hexene, 1-octene and 4-methyl-1-pentene; preferably, the α-olefin is 1-octene.

According to the preparation method of the present disclosure, the olefin solution copolymerization conditions comprise: the copolymerization temperature is within a range of -40°C to 200°C, preferably 25-120°C, more preferably 50-70°C; the partial pressure of ethylene during polymerization is within a range of 0.05-5MPa, preferably 0.1-2MPa, and more preferably 0.8-1.2MPa. The polymerization process of the present disclosure may be carried out intermittently or continuously.

According to the preparation method of the present disclosure, the polymerization process of the present disclosure is a solution polymerization process, and it will be apparent to those skilled in the art that the solvent used therein should be in a liquid state under the polymerization conditions, the solvent does not react with the catalyst system, and will neither participate in the polymerization reaction nor react with the polymer obtained from the reaction, i.e., the solvent is inert. Such solvents will be obvious to the ordinary skilled person in the field of coordination polymerization, and can be readily selected by the skilled person. Nevertheless, non-polar hydrocarbon solvents can be used in the present disclosure, the non-limiting examples of the non-polar hydrocarbon solvents are aromatic hydrocarbons such as benzene, toluene, ethylbenzene, xylene; one or more saturated aliphatic or alicyclic hydrocarbons such as butane, pentane, hexane, heptane, octane, cyclohexane, or any combination of two or more of the foregoing solvents, preferably hexane, octane or heptane, more preferably, hexane is used as the solvent in the polymerization process of the present disclosure. The used amount of the non-polar hydrocarbon solvent in the polymerization process of the present disclosure is conventional, it is determined based on the polymer dispersity and the heat dissipation condition of the system, for example, the used amount of non-polar hydrocarbon solvent may be controlled such that the monomer concentration is within the range of 5-30wt%, preferably 8-10wt%.

The copolymers prepared in the polymerization process of the present disclosure generally have a very high average molecular weight, which can be adjusted by those skilled in the art by using the well-known methods. In particular, the molecular chain transfer agents (e.g., diethyl zinc and hydrogen gas) can be used as the molecular weight regulators to control the molecular weight of the copolymer, preferably using hydrogen gas. Very small amounts of hydrogen gas can adjust the molecular weight of the copolymer within a wide range, the hydrogen gas is added in an amount of 0.01-10vol%, more preferably 0.02-5vol%, based on the total volume of the monomer mixed gas.

In the preparation method of the present disclosure, a terminating agent may be used to terminate the polymerization reaction after the polymerization reaction is completed. The terminating agents used for this step are conventional for those skilled in the art. The commonly used terminating agents include deionized water, alcohols, acids, and the like. The terminating agent used herein is preferably acidified ethanol or acidified methanol.

A third aspect of the present disclosure provides an ethylene-α-olefin copolymer composition comprising the ethylene-α-olefin copolymer according to the present disclosure, or the ethylene-α-olefin copolymer prepared with the method of the present disclosure, and a solvent.

According to the composition of the present disclosure, the solvent is preferably a residual preparation solvent derived from the preparation of the ethylene-α-olefin copolymer. The preparation solvent may be, for example, the solvents mentioned in the aforesaid preparation method.

In a preferred embodiment of the present disclosure, the composition is a product obtained with the preparation method of the present disclosure without removing the solvent or after removing a part of the solvent, the composition can directly act as a toughening modifier.

A fourth aspect of the present disclosure provides a use of the ethylene-α-olefin copolymer of the present disclosure in preparing an encapsulation film.

The ethylene-α-olefin copolymer in the present disclosure has low crystallinity and excellent transparency, thus the copolymer is particularly suitable for preparing the encapsulation film.

A fifth aspect of the present disclosure provides a use of the ethylene-α-olefin copolymer of the present disclosure or the ethylene-α-olefin copolymer composition of the present disclosure as a toughening modifier.

Given that the ethylene-α-olefin copolymer has a low glass transition temperature and excellent low-temperature toughness, it is particularly suitable to be used as a toughening modifier.

The present disclosure will be described below in detail with reference to examples, but the scope of the present disclosure is not limited by the examples.

In the following examples and comparative examples, the test methods are as follows.

(1) Weight average molecular weight and molecular weight distribution test

The molecular weight and molecular weight distribution of the samples were determined by using a PL-GPC 220 type GPC manufactured by Polymer Laboratories Ltd. in the United Kingdom. The chromatographic columns were 3 Plgel 10μm MIXED-B columns connected in series. Both the solvent and the mobile phases were 1,2,4-trichlorobenzene (containing 0.025wt% antioxidant 2,6-dibutyl-p-cresol), the column temperature was 150°C, the flow rate was 1.0ml/min, the sample concentration was 1mg/mL, an IR5 infrared concentration detector was furnished, and the universal calibration was performed using a narrow-distribution polystyrene standard samples.

(2) Composition distribution test

The molecular weight and molecular weight distribution of the samples were determined by using a PL-GPC 220 type GPC manufactured by Polymer Laboratories Ltd. in the United Kingdom. The chromatographic columns were 3 Plgel 10μm MIXED-B columns connected in series. Both the solvent and the mobile phases were 1,2,4-trichlorobenzene (containing 0.025wt% antioxidant 2,6-dibutyl-p-cresol), the column temperature was 150°C, the flow rate was 1.0mL/min, the sample concentration was 2mg/ml, and the universal calibration was performed using a narrow-distribution polystyrene standard samples.

(3) Comonomer content and dispersion tests

The content of comonomer in the samples was tested by using the AVANCE III 400MHz nuclear magnetic resonance spectrometer manufactured by Bruker Incorporation. The solvent was deuterated ortho-dichlorobenzene, the 10 mm PASEX 13C-1H/D Z-GRD probe was used, the sample with a mass concentration of 10% was dissolved uniformly at 130°C, the test temperature was 125°C, the rotational speed was 20Hz, 90° pulses, the spectral width was 120ppm, a sampling time was 5 seconds, the latency time was 10 seconds, and the scanning was performed for 6,000 times. The comonomer content was calculated based on the $^{13}$C-NMR spectrogram and using the method described in the literature (e.g., Macromolecules 2000, 33, 8931-8944; Macromolecules 2001, 34, 5770-5777).

Specific test methods for the comonomer dispersity AMD are described in the above specification.

(4) Thermal analysis test

The TA 100 differential scanning calorimeter was used, the scanning temperature was within a range of -80°C to 200°C, and the temperature ramp rate was 10°C/min. The thermal history was removed to obtain a secondary heating and melting curve, and normalized integral processing was performed. The term $T_{1/2}$ defined herein referred to a melting temperature corresponding to a melting enthalpy that was one half of the total melting enthalpy. A higher $T_{1/2}$ denoted a higher melting point, whereas a lower $T_{1/2}$ denoted a lower melting point.

Comparative Examples 1-3: samples of commercial ethylene/1-octene copolymers were designated with the product names DOW engage8150, engage8137 and engage8842, respectively.

Example 1

A well-dried 250mL polymerization apparatus was vacuumized and washed with nitrogen gas for three times repeatedly. The polymerization apparatus was then vacuumized, the solenoid valve was controlled to fill ethylene at a pressure of 1atm, 25mL of reaction solvent toluene, 1mL of 2,4-dichloro-1-naphthol solution (containing 0.5mmol of 2,4-dichloro-1-naphthol), 0.8mL of 1-octene were added at room temperature, 3mL of methylaluminoxane (MAO) solution (containing 5.0 mmol of methylaluminoxane) was further added, the temperature was raised to 50°C, 1mLof toluene solution containing 5.0μmol of diphenyl methylene (cyclopentadienyl) (fluorenyl) zirconium dichloride was subsequently added, and the timing was started. After 20 minutes, the feed of ethylene was shut off, the acidified ethanol was added into the reaction solution, then stirred for 6 hours, the reaction product was filtered to prepare a polymer, which was dried under vacuum for 24 hours, 1.47g of the polymer was weighed and produced. The test results were shown in Table 1.

Example 2

A well-dried 250mL polymerization apparatus was vacuumized and washed with nitrogen gas for three times repeatedly. The polymerization apparatus was then vacuumized, the solenoid valve was controlled to fill ethylene at a pressure of 1atm, 25mL of reaction solvent toluene, 1mL of 2,4-dichloro-1-naphthol solution (containing 0.5mmol of 2,4-dichloro-1-naphthol), 0.9mL of 1-octene were added at room temperature, 3mL of methylaluminoxane (MAO) solution (containing 5.0mmol of methylaluminoxane) was further added, the temperature was raised to 70°C, 1ml of toluene solution containing 5.0μmol of diphenyl methylene (cyclopentadienyl) (fluorenyl) zirconium dichloride was subsequently added, and the timing was started. After 20 minutes, the feed of ethylene was shut off, the acidified ethanol was added into the reaction solution, then stirred for 6 hours, the reaction product was filtered to prepare a polymer, which was dried under vacuum for 24 hours, 1.58g of the polymer was weighed and produced. The test results were shown in Table 1.

Example 3

A well-dried 250mL polymerization apparatus was vacuumized and washed with nitrogen gas for three times repeatedly. The polymerization apparatus was then vacuumized, the solenoid valve was controlled to fill ethylene at a pressure of 1atm, 25mL of reaction solvent toluene, 1mL of 2,4-dichloro-1-naphthol solution (containing 0.5mmol of 2,4-dichloro-1-naphthol), 1.0mL of 1-octene were added at room temperature, 3mL of methylaluminoxane (MAO) solution (containing 5.0mmol of methylaluminoxane) was further added, the temperature was raised to 55°C, 1mL of toluene solution containing 5.0μmol of diphenyl methylene (cyclopentadienyl) (fluorenyl) zirconium dichloride was subsequently added, and the timing was started. After 20 minutes, the feed of ethylene was shut off, the acidified ethanol was added into the reaction solution, then stirred for 6 hours, the reaction product was filtered to prepare a polymer, which was dried under vacuum for 24 hours, 1.51g of the polymer was weighed and produced. The test results were shown in Table 1.

Example 4

A well-dried 250mL polymerization apparatus was vacuumized and washed with nitrogen gas for three times repeatedly. The polymerization apparatus was then vacuumized, the solenoid valve was controlled to fill ethylene at a pressure of 1atm, 25mL of reaction solvent toluene, 1mL of 2,4-dichloro-1-naphthol solution (containing 0.5mmol of 2,4-dichloro-1-naphthol), 1.1mL of 1-octene were added at room temperature, 3mL of methylaluminoxane (MAO) solution (containing 5.0 mmol of methylaluminoxane) was further added, the temperature was raised to 70°C, 1mL of toluene solution containing 5.0μmol of diphenyl methylene (cyclopentadienyl) (fluorenyl) zirconium dichloride was subsequently added, and the timing was started. After 20 minutes, the feed of ethylene was shut off, the acidified ethanol was added into the reaction solution, then stirred for 6 hours, the reaction product was filtered to prepare a polymer, which was dried under vacuum for 24 hours, 1.61g of the polymer was weighed and produced. The test results were shown in Table 1.

Example 5

A well-dried 250mL polymerization apparatus was vacuumized and washed with nitrogen gas for three times repeatedly. The polymerization apparatus was then vacuumized, the solenoid valve was controlled to fill ethylene at a pressure of 1atm, 25mL of reaction solvent toluene, 1mL of 2,4-dichloro-1-naphthol solution (containing 0.5mmol of 2,4-dichloro-1-naphthol), 1.3mL of 1-octene were added at room temperature, 3mL of methylaluminoxane (MAO) solution (containing 5.0mmol of methylaluminoxane) was further added, the temperature was raised to 70°C, 1mL of toluene solution containing 5.0μmol of diphenyl methylene (cyclopentadienyl) (fluorenyl) zirconium dichloride was subsequently added, and the timing was started. After 20 minutes, the feed of ethylene was shut off, the acidified ethanol was added into the reaction solution, then stirred for 6 hours, the reaction product was filtered to prepare a polymer, which was dried under vacuum for 24 hours, 1.65g of the polymer was weighed and produced. The test results were shown in Table 1.

Example 6

A well-dried 250mL polymerization apparatus was vacuumized and washed with nitrogen gas for three times repeatedly. The polymerization apparatus was then vacuumized, the solenoid valve was controlled to fill ethylene at a pressure of 1atm, 25mL of reaction solvent toluene, 1mL of 2,4-dichloro-1-naphthol solution (containing 0.5mmol of 2,4-dichloro-1-naphthol), 1.3mL of 1-hexene were added at room temperature, 3mL of methylaluminoxane (MAO) solution (containing 5.0 mmol of methylaluminoxane) was further added, the temperature was raised to 70°C, 1mL of toluene solution containing 5.0μmol of diphenyl methylene (cyclopentadienyl) (fluorenyl) zirconium dichloride was subsequently added, and the timing was started. After 20 minutes, the feed of ethylene was shut off, the acidified ethanol was added into the reaction solution, then stirred for 6 hours, the reaction product was filtered to prepare a polymer, which was

dried under vacuum for 24 hours, 1.65g of the polymer was weighed and produced. The test results were shown in Table 1.

Comparative Example 4

The polymer was prepared according to the same method as Example 3, except that the 2,4-dichloro-1-naphthol solution was not added. The obtained polymer had a comonomer content of 15.3mol%, an RMD of 99.4%, a polymer molecular weight of $5.0\times10^4$, and a polymer molecular weight distribution of 2.5.

Table 1

| No. | Comonomer | | RMD % | Polymer molecular weight $M_w/10^4$ | Polymer molecular weight distribution PD | Melt index g/10min (190°C, 2.16kg) | Half-melting enthalpy temperature $T_{1/2}$ (°C) |
|---|---|---|---|---|---|---|---|
| | Type | Content mol% | | | | | |
| Comparative Example 1 | 1-octene | 13.0 | 101.2 | 14.5 | 2.2 | 1 | 38.1 |
| Comparative Example 2 | 1-octene | 14.5 | 101.5 | 7.2 | 2.0 | 13 | 28.7 |
| Comparative Example 3 | 1-octene | 16.9 | 101.8 | 14.2 | 2.1 | 1 | 15.3 |
| Example 1 | 1-octene | 9.9 | 103.7 | 12.7 | 2.9 | 3 | 58.5 |
| Example 2 | 1-octene | 11.0 | 104.1 | 7.7 | 2.2 | 12 | 48.7 |
| Example 3 | 1-octene | 12.9 | 105.4 | 12.8 | 2.1 | 3 | 34.1 |
| Example 4 | 1-octene | 15.0 | 105.8 | 8.1 | 2.0 | 11 | 22.1 |
| Example 5 | 1-octene | 17.5 | 106.5 | 8.2 | 2.1 | 11 | 10.6 |
| Example 6 | 1-hexene | 16.7 | 106.1 | 9.5 | 2.2 | 8 | 16.7 |

As can be seen by comparing Examples 1-6 with Comparative Examples 1-3, the ethylene-α-olefin copolymer of the present disclosure has a high RMD. The comparison result of Example 3 and Comparative Example 1 indicates that the comonomer content of Example 3 is roughly identical with that of Comparative Example 1, but the ethylene-α-olefin copolymer of Example 3 has a lower half-melting enthalpy temperature.

As illustrated by the comparison results between Examples 1-3 and Comparative Example 1, the copolymer of the present disclosure has a lower comonomer content and a higher RMD. Furthermore, it can be also derived by comparing Example 4 with Comparative Example 3 that the copolymer of the present disclosure has a lower comonomer content and a higher RMD.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. An ethylene-α-olefin copolymer comprising 70-95mol% of the structural unit derived from ethylene and 5-30mol% of the structural unit derived from α-olefin, the α-olefin is an olefin having 5-10 carbon atoms, and a RMD of the α-olefin structural unit in the molecular chain is greater than 102%.

2. The ethylene-α-olefin copolymer of claim 1, wherein the ethylene-α-olefin copolymer comprises 80-95mol% of the structural unit derived from ethylene and 5-20mol% of the structural unit derived from α-olefin;

   the ethylene-α-olefin copolymer comprises 82-89mol% of structural unit derived from ethylene and 11-18mol% of structural unit derived from α-olefin;
   preferably, the ethylene-α-olefin copolymer comprises 83mol% or more and 89mol% or less of the structural unit derived from ethylene and 11 mol% or more and 17mol% or less of the structural unit derived from α-olefin;
   more preferably, the ethylene-α-olefin copolymer comprises 84-89mol% of the structural unit derived from ethylene and 11-16mol% of the structural unit derived from α-olefin.

3. The ethylene-α-olefin copolymer of claim 1, wherein the RMD of the α-olefin structural unit in the molecular chain is 103% or more, preferably 104% or more, more preferably within a range of 104-108%.

4. The ethylene-α-olefin copolymer of any one of claims 1-3, wherein the molecular weight distribution Mw/Mn of the ethylene-α-olefin copolymer is within a range of 1.5-3, preferably within a range of 1.5-2.5, more preferably within a range of 1.5-2.3.

5. The ethylene-α-olefin copolymer of any one of claims 1-3, wherein the ethylene-α-olefin copolymer has a melt index MFRC within a range of 1.0-50g/10min, preferably within a range of 1-15g/10min at 190°C under a load of 2.16kg; preferably, the ethylene-α-olefin copolymer has a half-melting enthalpy temperature $T_{1/2}$ within a range of 5-80°C, more preferably 10-70°C, further preferably 15-60°C.

6. The ethylene-α-olefin copolymer of any one of claims 1-3, wherein the α-olefin is an olefin having 5-8 carbon atoms, preferably one or more selected from the group consisting of 1-pentene, 1-hexene, 1-octene and 4-methyl-1-pentene, more preferably 1-octene.

7. A method for preparing an ethylene-α-olefin copolymer comprising the following steps: under the olefin solution copolymerization conditions and the presence of a catalyst, a cocatalyst and a phenol, subjecting ethylene and α-olefin to copolymerized to obtain an ethylene-α-olefin copolymer,

   wherein the catalyst contains diphenyl methylene (cyclopentadienyl) (fluorenyl) zirconium dichloride and/or diphenyl methylene (cyclopentadienyl) (2,7-di-tert-butyl-fluorenyl) zirconium dichloride, the cocatalyst is an organoaluminium compound, the phenol is 2,4-dihalo-1-naphthol,
   the ethylene and the α-olefin are used in amounts such that the molar ratio of the structured unit derived from ethylene to the structured unit derived from α-olefin in the ethylene-α-olefin copolymer is (80-95): (5-20), and the α-olefin is an olefin having 5-10 carbon atoms.

8. The method of claim 7, wherein the ethylene and the α-olefin are used in amounts such that the molar ratio of the structured unit derived from ethylene to the structured unit derived from α-olefin in the ethylene-α-olefin copolymer is (82-89): (11-18), more preferably (84-89): (11-16).

9. The method of claim 7, wherein the catalyst calculated in terms of active metal is used in an amount of (0.01-10)×$10^{-6}$mol relative to 1mol of the ethylene.

10. The method of any one of claims 7-9, wherein the organoaluminium compound is an aluminoxane and/or a hydrocarbyl aluminium represented by Formula 1,

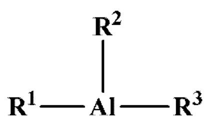
(Formula 1)

   In formula 1, $R_1$, $R_2$ and $R_3$ are the same or different and each independently selected from the group consisting of alkyl (including cycloalkyl), alkoxy, aryl, alkaryl, aralkyl and hydrogen, and $R_1$, $R_2$ and $R_3$ are not hydrogen atoms at the same time;

preferably, the organoaluminium compound is methylaluminoxane;
preferably, the molar ratio of the organoaluminium compound in terms of aluminium to the catalyst calculated in terms of active metal is 50-5,000: 1.

**11.** The method of any one of claims 7-9, wherein the molar ratio of 2,4-dihalo-1-naphthol to the catalyst calculated in terms of active metal is 1-500: 1;
preferably, the 2,4-dihalo-1-naphthol is 2,4-dichloro-1-naphthol and/or 2,4-dibromo-1-naphthol, more preferably 2, 4-dichloro-1-naphthol.

**12.** The method of any one of claims 7-9, wherein the α -olefin is an olefin having 5-8 carbon atoms, more preferably one or more selected from the group consisting of 1-pentene, 1-hexene, 1-octene and 4-methyl-1-pentene, further preferably 1-octene.

**13.** The method of any one of claims 7-9, wherein the olefin solution copolymerization conditions comprise: the copolymerization temperature is within a range of -40°C to 200°C, preferably 25-120°C, more preferably 50-70°C; the partial pressure of ethylene during polymerization is within a range of 0.05-5MPa, preferably 0.1-2MPa, and more preferably 0.8-1.2MPa.

**14.** The method of any one of claims 7-9, wherein the solvent used for the olefin solution copolymerization is one or more selected from the group consisting of benzene, toluene, ethylbenzene, xylene, pentane, hexane, heptane, octane and cyclohexane.

**15.** An ethylene-α-olefin copolymer composition comprising the ethylene-α-olefin copolymer of any one of claims 1-7, or the ethylene-α-olefin copolymer prepared with the method of any one of claims 8-14, and a solvent.

**16.** The composition of claim 15, wherein the solvent is a residual preparation solvent derived from the preparation of the ethylene-α-olefin copolymer.

**17.** A use of the ethylene-α-olefin copolymer of any one of claims 1-6 in preparing an encapsulation film.

**18.** A use of the ethylene-α-olefin copolymer of any one of claims 1-6 or the ethylene-α-olefin copolymer composition of claim 15 or 16 as a toughening modifier.

# INTERNATIONAL SEARCH REPORT

International application No.
**PCT/CN2022/122018**

**A. CLASSIFICATION OF SUBJECT MATTER**

C08F 210/16(2006.01)i；C08F 4/6592(2006.01)i；C08F 4/649(2006.01)i；C08F 4/642(2006.01)i

According to International Patent Classification (IPC) or to both national classification and IPC

**B. FIELDS SEARCHED**

Minimum documentation searched (classification system followed by classification symbols)

C08F; C08L

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI, ISI, STN: 乙烯, α-烯烃, 共聚物, 戊烯, 己烯, 辛烯, 分散指数, 分散度, RMD, 茂金属, 环戊二烯, 芴, 锆, 有机铝, 铝氧烷, 萘酚, 溶剂, 稀释剂, 封装膜, 增韧剂, ethylene, α-olefin, copolymer, pentene, hexene, octene, dispersion, dispersity, phenol, metallocene, cyclopentadiene, fluorene, zirconium, organoaluminum, alumoxane, naphthol, solvent, diluent, encapsulant film, toughening modifier

**C. DOCUMENTS CONSIDERED TO BE RELEVANT**

| Category* | Citation of document, with indication, where appropriate, of the relevant passages | Relevant to claim No. |
|---|---|---|
| X | US 5436305 A (PHILLIPS PETROLEUM COMPANY) 25 July 1995 (1995-07-25) column 16, line 46 to column 17, line 12, and embodiment XII | 1-6, 15-18 |
| Y | US 5436305 A (PHILLIPS PETROLEUM COMPANY) 25 July 1995 (1995-07-25) column 16, line 46 to column 17, line 12, and embodiment XII | 7-18 |
| X | US 4522987 A (PHILLIPS PETROLEUM COMPANY) 11 June 1985 (1985-06-11) embodiment III, and table IIIA, and column 6, line 40 to column 7, line 17 | 1-2, 4-6, 15-18 |
| X | JP 08198909 A (TOSOH CORP.) 06 August 1996 (1996-08-06) embodiment 6, and preparation I, and table 2 | 7-18 |
| Y | JP 08198909 A (TOSOH CORP.) 06 August 1996 (1996-08-06) embodiment 6, and preparation I, and table 2 | 7-18 |
| A | CN 102356098 A (CHEVRON PHILLIPS CHEMICAL CO.) 15 February 2012 (2012-02-15) embodiment 1, and tables 1-2 | 1-18 |

☐ Further documents are listed in the continuation of Box C. ☑ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **22 November 2022** | **22 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/122018**

| Patent document cited in search report | Publication date (day/month/year) | Patent family member(s) | Publication date (day/month/year) |
|---|---|---|---|
| US 5436305 A | 25 July 1995 | IE 922381 A1 | 27 January 1993 |
| | | HU T63972 A | 29 November 1993 |
| | | AT 217637 T | 15 June 2002 |
| | | RO 111683 B1 | 30 December 1996 |
| | | NO 922910 D0 | 22 July 1992 |
| | | MX 9202788 A | 01 January 1993 |
| | | SG 44707 A1 | 19 December 1997 |
| | | DK 0524624 T3 | 26 August 2002 |
| | | ZA 9203987 B | 24 February 1993 |
| | | FI 923337 A0 | 22 July 1992 |
| | | ZA 923987 B | 24 February 1993 |
| | | JP H10226695 A | 25 August 1998 |
| | | SK 230392 A3 | 10 May 1995 |
| | | DE 69232608 D1 | 20 June 2002 |
| | | KR 930002361 A | 23 February 1993 |
| | | CZ 230392 A3 | 17 February 1993 |
| | | CN 1068829 A | 10 February 1993 |
| | | JP H05239082 A | 17 September 1993 |
| | | PL 295385 A1 | 05 April 1993 |
| | | EP 0524624 A2 | 27 January 1993 |
| | | ES 2176180 T3 | 01 December 2002 |
| | | AU 1700292 A | 11 March 1993 |
| | | US 2006122344 A1 | 08 June 2006 |
| | | US 7230128 B2 | 12 June 2007 |
| US 4522987 A | 11 June 1985 | CA 1204249 A | 06 May 1986 |
| | | ES 8500966 A1 | 01 November 1984 |
| | | AT 27288 T | 15 June 1987 |
| | | JP S5924707 A | 08 February 1984 |
| | | DE 3371639 D1 | 25 June 1987 |
| | | JP H0680730 A | 22 March 1994 |
| | | EP 0100879 A2 | 22 February 1984 |
| JP 08198909 A | 06 August 1996 | JP 3572339 B2 | 29 September 2004 |
| CN 102356098 A | 15 February 2012 | IN 7126DELNP2011 A | 21 December 2012 |
| | | US 2011136996 A1 | 09 June 2011 |
| | | CO 6571848 A2 | 30 November 2012 |
| | | KR 20110129393 A | 01 December 2011 |
| | | BR PI1009883 A2 | 08 March 2016 |
| | | ES 2543609 T3 | 20 August 2015 |
| | | WO 2010107478 A1 | 23 September 2010 |
| | | EP 2408826 A1 | 25 January 2012 |
| | | MX 2011009795 A | 17 October 2011 |
| | | US 2010240844 A1 | 23 September 2010 |
| | | SG 174405 A1 | 28 October 2011 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202111156978

### Non-patent literature cited in the description

- *Macromolecules,* 2000, vol. 33, 8931-8944
- *Macromolecules,* 2001, vol. 34, 5770-5777